# EUROPÄISCHE PATENTSCHRIFT

(11) **EP 0 961 011 B1**
(45) Veröffentlichungstag und Bekanntmachung des Hinweises auf die Patenterteilung: **02.05.2003**
(21) Anmeldenummer: 98810498.0
(22) Anmeldetag: 28.05.1998
(51) Int. Cl.: F01K 23/10, F01D 25/36

(54) **Verfahren zum Betrieb von Gasturbinen und Kombikraftwerken**
Method of operating of gas turbines and combined cycle power plants
Procédé pour l'opération de turbines à gaz et des centrales à cycle combiné

(43) Veröffentlichungstag der Anmeldung: 01.12.1999
(73) Patentinhaber: ALSTOM (Switzerland) Ltd, 5401 Baden (CH)
(72) Erfinder: Braun, Jost, Dr., 79761 Waldshut-Tiengen (DE); Rothe, Thomas, Dr., 64380 Rossdorf (DE)
(74) Vertreter: Weiland, Andreas

(56) Entgegenhaltungen:
- US-A- 5 042 246

## Beschreibung

### Technisches Gebiet

Die vorliegende Erfindung betrifft ein Verfahren zum Betrieb von Gasturbinen oder Kombikraftwerken in einem ungefeuerten Zustand, wie zum Beispiel in US-A-5 042 246 dargestellt. Die betreffenden Kombikraftwerke bestehen im wesentlichen aus einer Gasturbine mit einfacher oder sequentieller Verbrennung, mindestens einem Generator, einer Anfahrvorrichtung zum Antrieb der Gasturbine während des ungefeuerten Betriebs und einem Dampfkreislauf, wobei dieser Dampfkreislauf im wesentlichen aus einem Abhitzedampferzeuger, aus mindestens einer Niederdruck- und/oder Mitteldruckdampfturbine und/oder einer Hochdruck-Dampfturbine besteht. Die Erfindung betrifft insbesondere Verfahren zum Betrieb in ungefeuertem Zustand der Gasturbinen wie das Kesselspülen während des Anfahrens, das Kühlen der Gasturbine während des Herunterfahrens oder das Waschen eines Kompressors einer solchen Anlage.

### Stand der Technik

Für das Anfahren einer Kombikraftwerksanlage in ungefeuertem Zustand bestehen regionale Bestimmungen oder vertragliche Vereinbarungen, welche als Sicherheitsmassnahme eine Kesselspülung vorschreiben. Diese Sicherheitsmassnahme bezweckt, den Kessel von Restbrennstoffen und explosiven Gasmischungen zu befreien und mögliche Explosionen während des Anfahrens zu vermeiden. Die Kesselspülung erfolgt durch Antreiben des Wellenstrangs durch eine Anfahrvorrichtung bei einer niedrigen Geschwindigkeit und einem niedrigen Massenstrom, wodurch Restbrennstoffe über den Kamin aus der Anlage getrieben werden. Heute wird das Spülen des Kessels bei einer konstanten Drehzahl durchgeführt. Bei dieser Drehzahl wird eine Gesamtspülmenge, die gemäss dem Kesselvolumen bestimmt wird, während einer anlagespezifischen Spülzeit durch den Kessel durchgesetzt.

Um ein sicheres Austreiben der restlichen Brennstoffe zu gewährleisten, werden die regionalen Bestimmungen in Zukunft vorschreiben, dass die Kesselspülung mit einem höheren Mindestmassenstrom wie bisher, einer höheren Mindestgeschwindigkeit oder innerhalb einer bestimmten Zeit erfolgt. Eine Anforderung der NFPA besagt beispielsweise, dass das Spülen mit höheren Massenströmen von 15 bis 25% des Vollastmassenstromes und über eine kürzere Spülzeit erfolgen muss. Diese Anforderung kann nur mit entsprechend hoher Antriebsleistung erfüllt werden, wobei die dann erreichten Drehzahlen sich in einem Bereich befinden, in dem Schaufelschwingungen durch die Drehfrequenzen und rotating stall-frequenzen angeregt werden können. Ein weiteres Problem besteht darin, dass bei höheren Drehzahlen die resonanzfreien Drehzahlbänder immer schmäler werden und der Anlagenbetreiber in der Wahl der Spüldrehzahl und der erreichten Massenströme stark eingeschränkt ist.

Ein zweiter ungefeuerter Betrieb einer Gasturbine oder eines Kombikraftwerks ist das Herunterfahren einer Anlage, bei der die Feuerung zunächst abgeschaltet und der Wellenstrang auf eine bestimmte Drehzahl verzögert wird. Die Drehzahl des Wellenstrangs wird sodann mit Hilfe einer Antriebsvorrichtung bei dieser Drehzahl gehalten und die Gasturbine durch forced cooling bei dieser Drehzahl schneller gekühlt, damit gegebenenfalls Inspektionen früher ausgeführt werden können und die Verfügbarkeit der Anlage erhöht wird.

Ein weiterer ungefeuerter Betrieb ist das Waschen eines Kompressors einer Gasturbine oder eines Kombikraftwerks. Hier wird der Wellenstrang durch eine Anfahrvorrichtung bei einer konstanten Drehzahl gedreht, während dem der Kompressor durch das Eindüsen von Reinigungsmittel-haltigem Wasser von Schmutzresten befreit wird. Auch hier ergibt sich das Problem von möglichen Anregungen von Schaufelschwingungen bei kritischen Drehzahlen.

### Darstellung der Erfindung

Hier will die Erfindung Abhilfe schaffen. Der Erfindung liegt die Aufgabe zugrunde, ein Verfahren zum Betrieb einer Gasturbine oder eines Kombikraftwerks in ungefeuertem Zustand zu schaffen, das den neuen Bestimmungen bezüglich Mindestmassenstrom und Mindestgeschwindigkeit der Turbine genügt und dabei Anregungen von Schaufelschwingungen vermeidet.
Die Aufgabe wird durch ein Verfahren zum Betrieb einer Gasturbine oder eines Kombikraftwerks gemäss des Oberbegriffs des Anspruchs 1 gelöst, bei dem die Antriebsleistung der Anfahrvorrichtung so geregelt wird, dass die Drehzahl des Wellenstrangs nach Erreichen einer vorbestimmten Mindestdrehzahl stets über dieser vorgegebenen Mindestdrehzahl ist und sie über dieser Mindestdrehzahl kontinuierlich variiert wird, indem der Wellenstrang abwechslungsweise beschleunigt und verzögert wird und die Drehzahl ein oder mehrere Drehzahlminima und - maxima durchläuft.

Die Veränderung der Drehzahl erfolgt durch eine entsprechende Veränderung der Antriebsleistung der Anfahrvorrichtung. Damit wird das Problem der Schaufelresonanzen gelöst, indem alle kritischen Drehzahlen genügend schnell durchlaufen werden und eine Anregung der Resonanzen vermieden wird. In Abhängigkeit von der maximal verfügbaren Antriebsleistung können beliebige Massenströme erreicht werden und dabei auch die erforderlichen Betriebszeiten verkürzt werden.

Der Vorteil des erfindungsgmässen Verfahrens ist, dass einerseits die Forderung einer Mindestdrehzahl des Wellenstrangs und des damit verbundenen Mindestluftmassenstroms und der Mindestluftgeschwindigkeit erfüllt wird und anderseits die Anregung von Schaufelschwingungen bei einer kritischen Drehzahl durch die ständige Variierung der Drehzahl vermieden wird. Letzteres wird dadurch erzielt, indem auf keiner Drehzahl längere Zeit verharrt wird, sondern die Drehzahlen stets genügend schnell durchlaufen werden.
Ein genügend schnelles Durchlaufen der kritischen Drehzahlen wird dadurch erreicht, indem die Antriebsleistung erhöht und wieder vermindert wird, wobei während der Spülzeit von mehreren Minuten mindestens ein Drehzahlmaximum und mindestens ein Drehzahlminimum durchlaufen wird.

In einer ersten Ausführung des Verfahrens wird die Drehzahl periodisch variiert, indem die Drehzahl mehrfach während regelmässigen Zeitabständen jeweils innerhalb eines Drehzahlbereichs erhöht und reduziert wird.
In einer Variante wird die Drehzahl aperiodisch erhöht und reduziert, indem die Zeitabstände zwischen Drehzahlerhöhungen und -reduzierungen voneinander unterschiedlich sind. Die positiven sowie negativen Drehbeschleunigungen werden dabei vorbestimmt oder auch während des Verfahrens entsprechend einer Messung der Luftgeschwindigkeit und des Luftmassenstroms im Kamin bestimmt.

Das erfindungsgemässe Verfahren lässt sich bei Kesselspülungen vor dem Anfahren einer Gasturbine oder eines Kombikraftwerks sowie auch für den ungefeuerten Betrieb während des forced cooling beim Herunterfahren solcher Anlagen anwenden. Ferner findet dieses Verfahren auch bei einem Kompressorwaschen Anwendung.

### Kurze Beschreibung der Zeichnungen

Es zeigen:
Figur 1 das Schema einer Kombikraftwerksanlage mit Gasturbine und einem Gasturbinengenerator auf einem Wellenstrang und einem Abhitzekessel und Dampfturbine mit separatem Generator auf einem anderen Wellenstrang.
Figur 2 ein Beispiel eines Verfahrens zur Kesselspülung eines Kombikraftwerks anhand einer Aufzeichnung der Drehzahl m des Wellenstrangs als Funktion der Spülzeit t.

### Weg der Ausführung der Erfindung

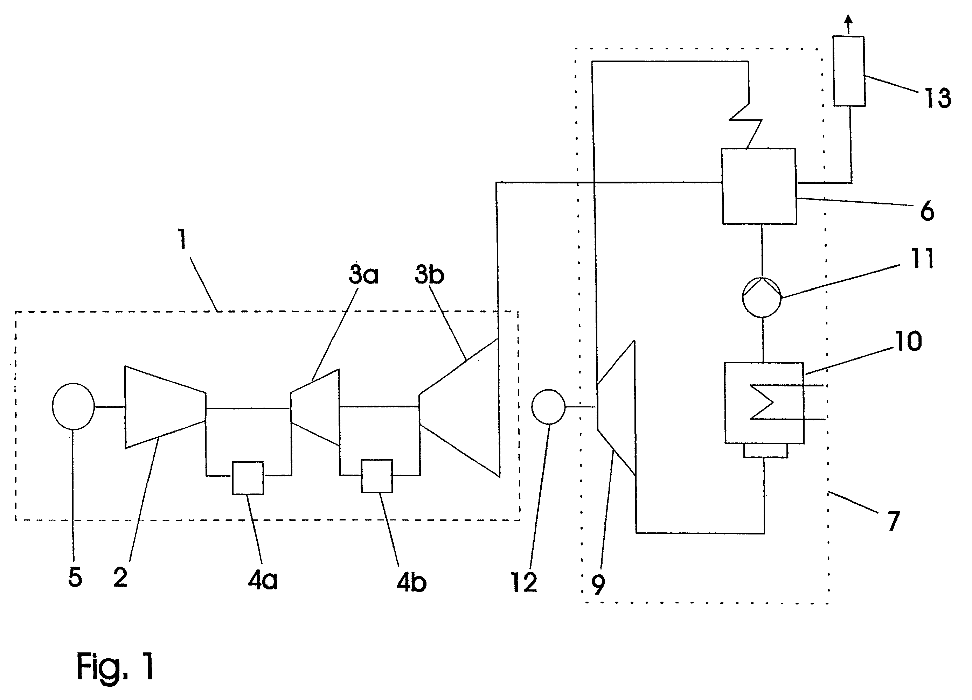

Das Schema in Figur 1 stellt ein Beispiel einer Kombikraftwerksanlage dar mit einer Gasturbine 1 und einer Verdichtereinheit 2, einer Hochdruckturbine 3a und Niederdruckturbine 3b mit je einer Brennkammer 4a und 4b. Die Gasturbine 1 ist mit einer mehrstufigen oder sequentiellen Verbrennung ausgerüstet, wobei sie grundsätzlich auch mit einer einstufigen Verbrennung ausgerüstet sein kann. Der Wellenstrang der Gasturbine 1 ist in direkter Wirkverbindung mit dem Generator 5 verbunden. Der Generator 5 ist ferner mit einer geeigneten Einrichtung versehen, welche es ermöglicht, ihn als Motor und Antriebsvorrichtung einzusetzen, um während des ungefeuerten Betriebes der Gasturbine 1 den Wellenstrang anzutreiben. Die heissen Abgase der Gasturbine 1 werden über einen Abgasdiffusor 20 in einen Abhitzekessel 6 geleitet, welcher im gefeuerten Zustand der Gasturbine einen Grossteil der Restwärme der Abgase der Gasturbine 1 auf den Dampfkreislauf 7 überträgt. Der Dampfkreislauf 7 besteht aus einer Dampfturbine 9, einem Kondensator 10 und einer Speisewasserpumpe 11, wobei die Dampfturbine 9 aus mindestens einer Niederdruck- und/oder Mitteldruckdampfturbine und/oder einer Hochdruckdampfturbine besteht. Grundsätzlich kann der Dampfkreislauf 7 auch mehrere Dampfturbinen verschiedener Druckstufen enthalten. Die Dampfturbine 9 treibt im Beispiel einen eigenen Generator 12 an. Grundsätzlich können die Dampfturbine 9 und Gasturbine 1 auch mit einem gemeinsamen Generator verbunden sein.

Vor der Zündung der Brennkammern 4a, 4b der Gasturbine 1 und dem Anfahren der Kombikraftwerksanlage, wird zunächst vorhandener Restbrennstoff im Abhitzekessel 6 durch Kesselspülen ausgetrieben. Diese Massnahme dient der Vermeidung von Explosionen, die aus den vorherrschenden Gasmischungen entstehen können und damit einhergehende Zerstörungen an der Anlage. Das Kesselspülen erfolgt im ungefeuerten Zustand der Anlage, wobei der als Motor geschaltete Gasturbinengenerator 5 den Wellenstrang der Gasturbine 1 antreibt und einen Luftstrom durch den Abhitzekessel 6 treibt und dabei die explosiven Gasmischungen über den Kamin 13 des Abhitzekessels 6 aus der Anlage entfernt.

Der Antrieb des Wellenstrangs kann entweder durch eine Dampfturbine, eine separate Gasturbine oder einen Motor erfolgen. Es kann zum Beispiel der Generator mit einer geeigneten Vorrichtung versehen werden, die es ermöglicht, ihn als Motor einzusetzen.

Gemäss der Erfindung wird die Antriebsleistung des antreibenden Aggregats, zum Beispiel des Generators 5 so geregelt, dass einerseits die Drehzahl der Welle die von einer regionalen Bestimmung oder durch den Betreiber der Kraftwerksanlage vorgeschriebene Mindestdrehzahl erreicht oder überschreitet und anderseits nicht auf einer einzigen Drehzahl verharrt, sondern mehrere verschiedene Drehzahlen kontinuierlich durchläuft.

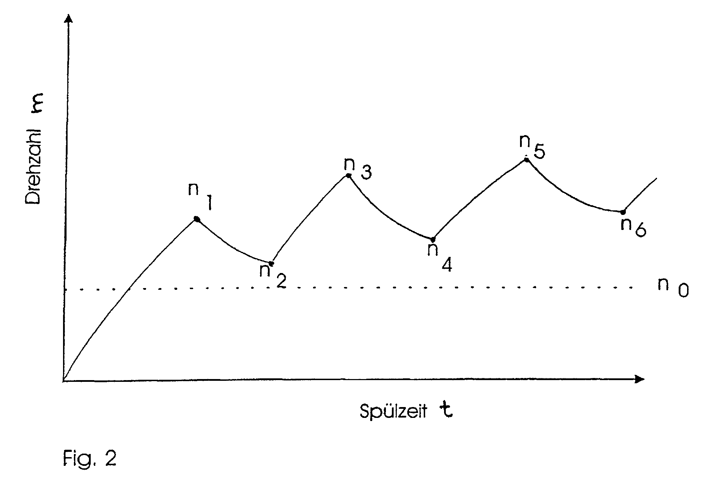

Figur 2 zeigt ein Beispiel des Verlaufs der Drehzahl m des Wellenstrangs als Funktion der Kesselspülzeit t. In diesem Beispiel wird die Welle über die Mindestdrehzahl n₀ hinaus beschleunigt. Nach Erreichen der Drehzahl n₁ wird die Antriebsleistung des Generators 5 reduziert, sodass die Welle sich nicht weiter beschleunigt und verzögert wird bis die Drehzahl n₂ erreicht wird, wobei die Drehzahl n₂ über der Mindestdrehzahl n₀ liegt. Sobald diese untere Drehzahl n₂ erreicht ist, wird die Antriebsleistung wieder erhöht, sodass sich die Drehzahl wiederum erhöht. Die Welle wird so weit beschleunigt bis die Drehzahl n₃ erreicht worden ist, wonach erneut die Antriebsleistung gedrosselt wird, um die Welle zu verzögern. In ähnlicher Art und Weise wird die Antriebsleistung weiter so geregelt, sodass die Drehzahl auf die Drehzahl n₄ zurückfällt, auf n₅ sich beschleunigt, wieder auf n₆ zurückfällt usw. Dieser Vorgang der Beschleunigung und Verzögerung wird so lange durchgeführt bis die gesamte Spülzeit durchlaufen ist und die Kriterien der Kesselspülung erfüllt sind. Diese Kriterien sind zum Beispiel die Geschwindigkeit der Luft, die durch den Kamin entweicht sowie das Volumen des Luftausstosses im Vergleich zum Volumen des Kessels. Beispielsweise wird bei der Kesselspülung ein Luftvolumen durchgestossen, das dem dreifachen Kesselvolumen entspricht. Der Luftausstoss lässt darauf schliessen, wie oft der Kessel in seinem gesamten Volumen durchspült worden ist. Die Luftgeschwindigkeit deutet darauf hin, wie gut Restbrennstoffe aus den engeren Kavitäten des Kesselraums herausgespült worden sind. Je höher die Luftgeschwindigkeit desto eher werden Restbrennstoffe aus kleinen Räumen und Verwinkelungen im Kessel herausgespült. Die Zeitdauer zwischen Drehzahlminima und Drehzahlmaxima ist in diesem Ausführungsbeispiel jeweils unterschiedlich, sodass sich ein aperiodisches Laufmuster ergibt. Die Drehzahlminima n₂, n₄, n₆ liegen dabei alle über der Mindestdrehzahl n₀. Nach Erfüllung der Forderungen der Kesselspülung ist die Kesselspülung beendet und der Wellenstrang wird auf eine Drehzahl verzögert, die unter der Mindestdrehzahl für die Spülung liegt. Nach Erreichen der erforderlichen Zünddrehzahl wird die Brennkammer 4a schliesslich gezündet.
Nach Beenden der Kesselspülung wird der Wellenstrang verzögert, sodass die für die Zündung verlangte Drehzahl erreicht wird, welche unter der erwähnten Mindestdrehzahl für die Kesselspülung liegt.

Die Drehzahlen n₂, n₄, n₆ usw. und die Drehzahlen n₁, n₃, n₅ usw. sind in dem gezeigten Beispiel jeweils nicht gleich. In einer Variante können jedoch die Drehzahlminima und Drehzahlmaxima jeweils gleich sein. Es gilt lediglich
n₁ > n₂,
n₂<n₃,
n₃>n₄,
n₄ < n₅
usw.

In einer weiteren Variante ist die Zeitdauer der Beschleunigungen sowie die der Verzögerungen der Wellendrehzahl gleich. In dieser Variante durchläuft also die Drehzahl eine periodische Funktion der Zeit.
Die Drehzahlmaxima und -minima sowie die Zeitspannen für jede der Beschleunigungen und Verzögerungen werden beispielsweise anhand von Anlagenund Betriebsspezifikationen vorbestimmt. Eine Bestimmung des Drehzahlverlaufs als Funktion der Zeit während der Spülung ist jedoch auch anhand von Messwerten denkbar. Solche Messwerte sind beispielsweise die Geschwindigkeit des Luftstroms und des Luftmassenstroms im Kamin 13 des Abhitzekessels 6, Vibrationsgrössen an der Welle oder eine andere geeignete Messgrösse. Mit einer solchen Messgrösse könnte die Antriebsleistung des Wellenstrangs direkt geregelt werden.

Die Höhe der Drehzahlen n₀, n₁, n₂ usw. richtet sich dabei hauptsächlich nach den Erfordernissen des Spülens und der darauf ausgelegten Leistung der Anfahrvorrichtung. Der Grad der Beschleunigungen und Abbremsungen des Wellenstranges wird hingegen so ausgelegt, dass sich Resonanzen in der betreffenden Turbinenschaufeln nicht aufbauen können, d. h. er muss jeweils einen Mindestwert besitzen, sodass die kritischen Drehzahlen der Turbine schnell genug durchlaufen werden. Diese wird je nach Typ der Anlage und Spülerfordernisse bestimmt.

Dieses Verfahren ist auch bei weiteren Turbinenanordnungen, wie Einwellenanlagen, Mehrdruckdampfkreisläufe und Gasturbinen mit einstufiger Verbrennung sinngemäss gleich anwendbar.

### Bezugszeichenliste

- 1: Gasturbine
- 2: Verdichtereinheit, Kompressor
- 3a: Hochdruckturbine
- 3b: Niederdruckturbine
- 4a,b: Brennkammer
- 5: Gasturbinengenerator mit Anfahrvorrichtung
- 6: Abhitzekessel
- 7: Dampfkreislauf
- 8: Trommel
- 9: Dampfturbine
- 10: Kondensator
- 11: Speisewasserpumpe
- 12: Dampfturbinengenerator
- 13: Kamin
- 20: Abgasdiffusor

## Patentansprüche

1. Verfahren zum Betrieb einer Gasturbine (1) oder Kombikraftwerksanlage in ungefeuertem Zustand, wobei die Kombikraftwerksanlage im wesentlichen aus mindestens einem Wellenstrang, einer Gasturbine (1) mit einfacher oder sequentieller Verbrennung, mindestens einem Generator (5), einer Anfahrvorrichtung (5) zum Antrieb der Gasturbine und einem Dampfkreislauf (7), wobei dieser Dampfkreislauf (7) im wesentlichen aus einem Abhitzekessel (6) und mindestens einer Dampfturbine (9) besteht,
**dadurch gekennzeichnet, dass**
die Antriebsleistung der Anfahrvorrichtung (5) so geregelt wird, dass die Drehzahl des Wellenstrangs nach Erreichen einer Mindestdrehzahl n₀ stets über dieser Mindestdrehzahl n₀ ist und sie über dieser Mindestdrehzahl n₀ kontinuierlich variiert wird, indem der Wellenstrang abwechslungsweise beschleunigt und verzögert wird und die Drehzahl ein oder mehrere Drehzahlminima und -maxima durchläuft.

2. Verfahren nach Anspruch 1
**dadurch gekennzeichnet, dass**
die Drehzahlmaxima und Drehzahlminima jeweils gleich sind.

3. Verfahren nach Anspruch 1
**dadurch gekennzeichnet, dass**
die Drehzahlmaxima und Drehzahlminima jeweils unterschiedlich sind.

4. Verfahren nach Anspruch 2 oder 3
**dadurch gekennzeichnet, dass**
die Dauer der Beschleunigungen und der Verzögerungen des Wellenstrangs jeweils gleich ist.

5. Verfahren nach Anspruch 2 oder 3
**dadurch gekennzeichnet, dass**
die Dauer der Beschleunigungen und der Verzögerungen des Wellenstrangs jeweils unterschiedlich lang ist.

6. Verfahren nach Anspruch einem der Ansprüche 1 bis 5
**dadurch gekennzeichnet, dass**
die Drehzahlmaxima und Drehzahlminima sowie die Dauer der Beschleunigungen und Verzögerungen des Wellenstrangs während des Betriebs durch Messwerte des Luftstroms im Kamin und/oder von Vibrationen an der Welle bestimmt und geregelt werden.

7. Verfahren nach einem der Ansprüche 1 bis 6
**dadurch gekennzeichnet, dass**
der Antrieb des Wellenstrangs durch einen Motor, eine Dampfturbine oder eine separate Gasturbine erfolgt.

## Claims

1. Method for the operation of a gas turbine (1) or combined-cycle power plant in the unfired state, the combined-cycle power plant consisting essentially of at least one shafting, of a gas turbine (1) with simple or sequential combustion, of at least one generator (5), of a start-up device (5) for driving the gas turbine and of a steam circuit (7), this steam circuit (7) consisting essentially of a waste-heat boiler (6) and of at least one steam turbine (9), **characterized in that** the drive power of the start-up device (5) is regulated in such a way that the rotational speed of the shafting, after reaching a minimum rotational speed n₀, is always above this minimum rotational speed n₀, and, above this minimum rotational speed n₀, it is varied continuously, **in that** the shafting is alternately accelerated and decelerated and the rotational speed passes through one or more rotational-speed minima and maxima.

2. Method according to Claim 1, **characterized in that** the rotational-speed maxima and rotational-speed minima are in each case identical.

3. Method according to Claim 1, **characterized in that** the rotational-speed maxima and rotational-speed minima are in each case different.

4. Method according to Claim 2 or 3, **characterized in that** the duration of the accelerations and decelerations of the shafting is in each case identical.

5. Method according to Claim 2 or 3, **characterized in that** the duration of the accelerations adecuado and decelerations of the shafting is in each case of different length.

6. Method according to one of Claims 1 to 5, **characterized in that** the rotational-speed maxima and rotational-speed minima and also the duration of the accelerations and decelerations of the shafting are determined and regulated, during operation, by means of measurement values of the air stream in the chimney and/or of vibrations on the shaft.

7. Method according to one of Claims 1 to 6, **characterized in that** the drive of the shafting takes place by means of a motor, a steam turbine or a separate gas turbine.

## Revendications

1. Procédé pour l'opération d'une turbine à gaz (1) ou d'une installation de centrale à cycle combiné dans l'état non chauffé, l'installation de centrale à cycle combiné se composant d'au moins une ligne d'arbres, d'une turbine à gaz (1) à combustion simple ou séquentielle, d'au moins un générateur (5), un dispositif de mise en route (5) pour l'entraînement de la turbine à gaz et d'un circuit de vapeur (7), ce circuit de vapeur (7) se composant essentiellement d'une chaudière de récupération (6) et d'au moins une turbine à vapeur (9),
**caractérisé en ce que**
la puissance d'entraînement du dispositif de mise en route (5) est régulée de telle sorte que la vitesse de rotation de la ligne d'arbres après avoir atteint une vitesse de rotation minimale n₀ soit toujours supérieure à cette vitesse de rotation minimale n₀ et varie en continu au-dessus de cette vitesse de rotation minimale n₀, en accélérant et en ralentissant la ligne d'arbres en alternance, et en faisant passer la vitesse de rotation par un ou plusieurs minima et maxima de vitesse de rotation.

2. Procédé selon la revendication 1, **caractérisé en ce que** les maxima de vitesse de rotation et minima de vitesse de rotation sont dans chaque cas égaux.

3. Procédé selon la revendication 1, **caractérisé en ce que** les maxima de vitesse de rotation et minima de vitesse de rotation sont à chaque fois différents.

4. Procédé selon la revendication 2 ou 3, **caractérisé en ce que** la durée des accélérations et des ralentissements de la ligne d'arbres est à chaque fois identique.

5. Procédé selon la revendication 2 ou 3, **caractérisé en ce que** la durée des accélérations et des ralentissements de la ligne d'arbres est à chaque fois différente.

6. Procédé selon l'une quelconque des revendications 1 à 5, **caractérisé en ce que** les maxima de vitesse de rotation et minima de vitesse de rotation ainsi que la durée des accélérations et des ralentissements de la ligne d'arbres pendant le fonctionnement sont déterminés et régulés par des valeurs de mesure du flux d'air dans la cheminée et/ou par des vibrations de l'arbre.

7. Procédé selon l'une quelconque des revendications 1 à 6, **caractérisé en ce que** l'entraînement de la ligne d'arbres est réalisé par un moteur, une turbine à vapeur ou une turbine à gaz séparée.
